Europäisches Patentamt

European Patent Office

Office européen des brevets

(19)

(11) Publication number: **0 138 675**
**A2**

(12) **EUROPEAN PATENT APPLICATION**

(21) Application number: **84401882.0**

(22) Date of filing: **21.09.84**

(51) Int. Cl.⁴: **G 06 F 12/10**

(30) Priority: **22.09.83 US 535967**

(43) Date of publication of application: **24.04.85**
**Bulletin 85/17**

(84) Designated Contracting States: **DE FR GB**

(71) Applicant: **DIGITAL EQUIPMENT CORPORATION,
146 Main Street, Maynard, MA 01754 (US)**

(72) Inventor: **Nguyen, Le Trong, 7 Champlain Drive, Hudson,
Massachusetts 01749 (US)**
Inventor: **Sites, Richard L., 21 Warren Street, Boylston,
Massachusetts 01505 (US)**
Inventor: **Herrick, William V., 11 Barbara Road, Belmont,
Massachusetts 02178 (US)**
Inventor: **Lackey, Stanley A., 18 Florence Street,
Littleton, Massachusetts 01460 (US)**

(74) Representative: **Mongrédien, André et al, c/o SOCIETE
DE PROTECTION DES INVENTIONS 25, rue de Ponthieu,
F-75008 Paris (FR)**

(54) **Virtual address mapping using a 2-level translation buffer.**

(57) A circuit for translating virtual addresses to physical addresses particularly for use in a single-chip microprocessor (10). A main translation buffer (40), which has a small number of address conversions, is located ont he microprocessor. A back-up translation buffer (62) is located off the microprocessor chip whith a larger number of address conversions. If the main translation buffer does not have the address conversion required by a particular virtual address, it transmits (over lines 46) the virtual address to the back-up translation buffer. If the back-up translation buffer has the address conversion, it transmits it to the main translation buffer (over lines 48). If the back-up translation buffer also does not have the required address conversion, it transmits a miss signal (over line 64) to control circuitry (54) on the microprocessor chip which performs the translation using tables (72) in main memory (70). The address conversion is then transmitted (over lines 68) to both the main and back-up translation buffers.

1

## VIRTUAL ADDRESS MAPPING USING A 2-LEVEL
### TRANSLATION BUFFER

The present invention relates to memory management systems using virtual-to-physical address mapping, and more specifically to virtual mappings using, in addition to a conventional main-memory translation level, a two-level translation buffer.

In a typical virtual-memory management system, a virtual address to be translated is divided in two parts. A first part is used without translation as the least significant part of the physical address. A second part is then used to access a look-up table stored in memory holding the physical addresses. The second part is typically divided in three subparts, a first subpart being used to select one of a number of look-up tables addressed by the second subpart, and a corresponding second look-up table being addressed by the third subpart. Since the look-up tables mapping a large virtual memory space into a smaller physical memory space are large, they must be held in memory. The translation uses two additional memory references; thus, to obtain an actual address it takes as many as three memory references.

To obviate this time consuming level of translation, a second level of translation has been provided. This second level of translation is implemented by using a translation

SR 2643 US-BL

buffer, also called a dynamic look-aside table. A translation buffer holds a number of two-part entries, with each entry having as the first part a virtual address and as the second part the corresponding physical address. Since the translation buffer is formed by hardware registers, the physical address is immediately available without a memory reference if a virtual address is found in the translation buffer. Of course, if the virtual address is not found in the translation buffer, then the system reverts back to the first level of translation and its corresponding three memory references. Once a virtual address has been translated this way, it and its corresponding physical address are entered in the translation buffer, for future reference.

On a large processor, for instance an IBM 370, a large translation buffer can be provided, thus limiting the instances when the slow first translation level is needed. On small processors implemented on integrated circuits, a large translation buffer cannot be used, since it requires a large area, leaving not enough room for anything else. In this case a small translation buffer may be used. The problem, then, is that by using a small translation buffer, i.e. very few entries, the number of instances when the virtual address will not be found on the translation buffer will be great. This means that the slow first level translation is needed often, slowing down the system and impairing performance.

SR 2643 US-BL

0138675

3

## SUMMARY

These and other problems are solved by the present invention which provides for a small processor having a two-level translation buffer for improved performance. This is achieved by using a first translation buffer, for just a few entries, on the instruction execution subsystem, and a second translation buffer, containing a much larger number of entries, on a separate subsystem.

The present invention further provides for a computer system, including a processor subsystem using virtual memory, in which address translation means comprise first translation buffer means for translating a selected virtual address into a physical address, the first means being located within the processor subsystem and having a predetermined first number of virtual/physical address entries, second translation buffer means for translating the selected virtual address into a physical address upon a missed match in the first translation buffer means, the second means being located off the processor subsystem and having a predetermined second number, greater than the first, of virtual/physical address entries, and means for translating upon a missed match in the second translation buffer means the selected virtual address into a physical address from tables stored in memory.

SR 2643 US-BL

BRIEF DESCRIPTION OF THE DRAWINGS

Fig. 1 shows a functional block diagram of the memory mapping system of the present invention.

Fig. 2 shows a more detailed block diagram of the first translation buffer.

DESCRIPTION

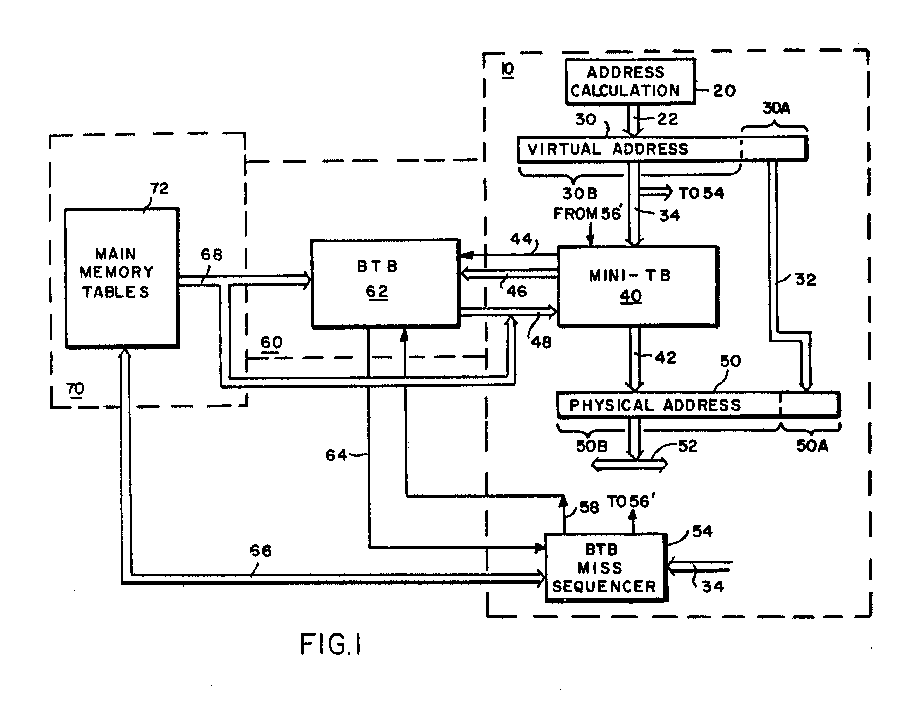

Referring now to Fig. 1, there is shown a functional block diagram of the memory mapping system of the present invention. It comprises Microprocessor subsystem 10, Backup Translation Buffer (BTB) subsystem 60, and Main Memory subsystem 70. Only those components of Microprocessor subsystem 10 related to address translation are shown in the figure, since all the other components of a microprocessor using virtual addressing are well known in the art. In the preferred embodiment Microprocessor subsystem 10 and BTB subsystem 60 are implemented as separate integrated circuits.

Microprocessor subsystem 10 comprises a conventional Address Calculation circuit 20, which is used in the figure to encompass all the various circuits that are needed in a typical microprocessor to produce, for a particular instruction, the virtual address to be translated into a physical address. The virtual address thus calculated is then fed over lines 22 to Virtual Address Register 30. A first part 30A of Virtual Address Register 30, corresponding to a predetermined number of least significant address bits, is coupled directly through lines 32 to a corresponding first part 50A of Physical Address Register 50, to be used as the physical address bits defining the address within a given page frame of physical memory. A

SR 2643 US-BL

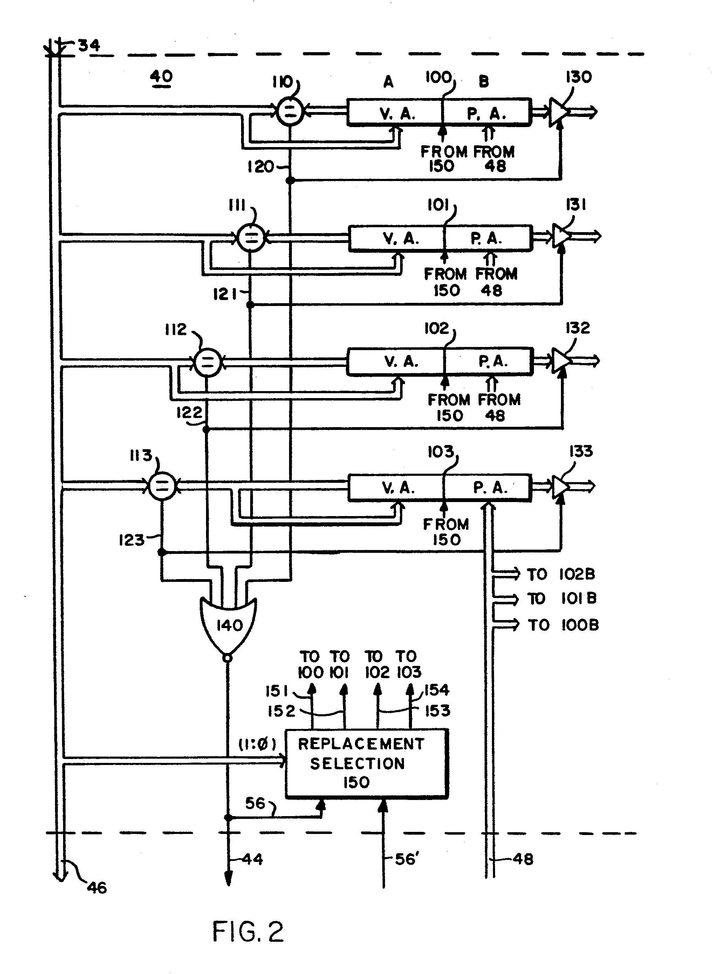

second part 30B of Virtual Address Register 30 is sent over lines 34 to Mini-Translation Buffer (mini-TB) 40. A more detailed description of mini-TB 40 will be given below in connection with Fig. 2. Suffice it to say, for now, that the virtual address portion 30B is compared with one or more entry in a look-up table, part of mini-TB 40.

If a match is found on the mini-TB, the physical address corresponding to the matched virtual address entry is loaded via lines 42 onto second part 50B of Physical Address Register 50, to be used as the physical address bits defining a page frame number. Physical Address Register 50 then loads the entire physical address on the Physical Address Bus 52. This level of translation is done during the tail end of the cycle in which the virtual address is loaded on Register 30. Since this translation involves only local register accesses, it is completed before the end of the cycle.

If a match is not found on the mini-TB, a No Match signal 44 is generated and sent to Backup Translation Buffer 62 along with the second portion 30B of the virtual address which is sent over lines 46. BTB 62 is similar to mini-TB 40, the difference being only in the much greater number of entries, or the translation buffer of a VAX-11/780 or IBM 370 computer can be used. The virtual address portion 30B is now compared with one or more entries that are part of BTB 62. If a match is found, the physical address corresponding to the matched virtual

..ddress entry is sent back over lines 48 to mini-TB 40 to be overwritten, along with the virtual address being translated, on a predetermined Mini-TB 40 entry. Mini-TB 40 generates an Enable Mini-TB Load Signal 56 for this purpose. The fill or replacement algorithm will be discussed below. The mini-TB level translation is then retried and the physical address is loaded by the mini-TB on the corresponding portion of Physical Register 50. Since the BTB level of translation involves access of registers in a different subsystem, i.e. off-chip in an integrated circuit implementation, it is not completed within the same cycle, but requires only one extra cycle.

If a match is not found on the BTB, BTB 62 generates and sends a No-BTB-Match Signal 64 to BTB-Miss Sequencer 54. BTB-Miss Sequencer 54 uses this signal to perform a conventional translation using tables stored in Main Memory 72, and includes the required standard microprocessor circuitry and/or microcode, as is well known in the art. Once the translation is done, the physical address is placed, from memory 72, on lines 68 and 48 for access by BTB 62 and mini-TB 40. Sequencer 54 also generates Enable mini-TB Load Signal 56' and Enable BTB Load Signal 58 to load the physical address on lines 68 and 48 and the virtual address on lines 46 and 34 in corresponding registers of, respectively, BTB 62 and mini-TB 40. The mini-TB level translation is then retried and the physical address is loaded by the mini-TB on the corresponding portion of Physical Address Register 50.

SR 2643 US-BL

Since this main memory level of translation involves two memory accesses, it will complete in a time corresponding to the two cycles needed to generate the mini-TB and BTB miss signals plus the number of cycles corresponding to the two memory references.

The advantage of such an arrangement is that a physical address is available in most instances from the mini-TB in a very short time, while being available from the BTB for most of the remaining instances in just a little more time. Only for a few instances will the physical address have to be calculated using the sequencer and the main memory tables. This arrangement has almost the speed of a translation buffer corresponding in size to the BTB, with an on-chip area of the small mini-TB.

Referring now to Fig. 2, there is shown a more detailed block diagram for mini-TB 40. It comprises four Storage Registers 100 through 103. Each storage register has two parts. A first part A stores a virtual address, and a second part B stores a corresponding physical address. The virtual address calculated in Address Calculator 20, sent over lines 34, is then compared with the virtual address entries 100A through 103A by means of comparators 110 through 113. Each comparator 110 through 113 asserts a corresponding signal, 120 through 123 respectively, if a match is found.

If a mini-TB match is found, a corresponding one of comparator signals 120 through 123 also enables a corresponding Bus Driver 130 through 133 to load the physical address portion B corresponding to the matched virtual address onto the Physical Address bus 42.

Comparator signals 120 through 123 are coupled to NOR-gate 140 to generate the No-Match signal 44, used to start the search on BTB 62 when no match is found.

If a mini-TB match is not found, once the virtual address has been translated either in the BTB 62 or from the main memory tables, the physical address present on lines 48 and the virtual address present on lines 34 is written on an appropriate one of Storage Registers 100 through 103. Register Load Signals 151 through 154 control the loading of Registers 100 through 103. One of Register Load Signals 151 through 154 will be set by Replacement Selection Circuit 150, as a function of the two least significant bits of the Virtual address, if so enabled by Enable mini-TB Load signal 56 or 56'.

This completes the description of the present invention. Some modifications will be apparent to persons skilled in the art. For instance, the direct mapped look-up/replacement means can be replaced by a set-associative or fully-associative means, as is well known in the art. The number of entries in the mini-TB can also be changed to fit a particular application. Other modifications may be made without departing from the spirit and

SR 2643 US-BL

scope of the present invention.   Accordingly, it is intended that this invention be not limited to the embodiments disclosed herein except as defined by the appended claims.

SR 2643 US-BL

CLAIMS                                    0138675

1. Virtual address translation circuitry for use in a digital data processing system including a processor subsystem including processing means for processing programs at address locations identified by virtual addresses, the digital data processing system further including a memory including a plurality of addressable storage locations each identified by a physical address, the processing means further including retrieval means for retrieving the contents of selected locations in the memory, said virtual address translation circuitry including:

    (a) means located within said processor subsystem adapted to be connected to said processing means for receiving a virtual address from said processing means;

    (b) first translation buffer means located within said processor subsystem connected to said receiving means including a predetermined number of entries each corresponding to a virtual address and including a physical address corresponding to the entry's virtual address, said first translation buffer means transmitting the physical address from an entry for the virtual address received by said receiving means;

    (c) second translation buffer means located outside said processor subsystem and connected to said first translation buffer means including a predetermined number of entries each corresponding to a virtual address and including a physical address corresponding to the entry's virtual address, said first translation buffer means transmitting a virtual address to said second translation buffer means if it does not include an entry for the virtual address, said second translation buffer means

SR 2643 US/BL

transmitting the physical address from an entry for the virtual address received from said first translation buffer means;

(d) translation means located outside said processor subsystem and connected to said second translation buffer means, said second translation buffer means transmitting a virtual address to said translation means if it does not include an entry for the virtual address, said translation means translating the virtual address into a physical address; and

(e) means connected to said first translation buffer means, said second translation buffer means, and said translation means and adapted to be connected to the memory for receiving the physical address from said first translation buffer means, said second translation buffer means, or said translation means to enable the retrieving means to use the physical address in a memory retrieval operation.

2. Virtual address translation circuitry as defined in claim 1 wherein each entry in said first and second translation buffer means includes a virtual address portion which stores the virtual address and a physical address portion which stores the corresponding physical address, each said first and second translation buffer means including means for comparing the received virtual address with the contents of the virtual address portions of the entries and for transmitting the contents of the physical address portion of an entry to said enabling means whose high-order portion matches the received virtual address.

SR 2643US/BL

0138675

3. Virtual address translation circuitry as defined in claim 2 wherein said first translation buffer means is further connected to receive from said second translation buffer means a physical address in response to the transmission by said first translation buffer means to said second translation buffer means of a virtual address not having a corresponding entry in said first translation buffer means, said first translation buffer means including means for selecting an entry in said first translation buffer means and for loading the physical address into the physical address portion of said entry and the virtual address into the virtual address portion of the same entry.

4. Virtual address translation circuitry as defined in claim 3 wherein both said first and second translation buffers are further connected to receive from said translation means a physical address in response to the transmission by said second translation buffer means to said translation means of a virtual address not having a corresponding entry in said second translation buffer means, said first and second tranlation buffer means including means for selecting an entry in said respective first and second translation means and for loading the physical address into the physical address portion of said entry and the virtual address into the virtual address portion of the same entry.

5. Virtual address translation circuitry as defined in claim 4 wherein each said entry is identified by an address corresponding

SR 2643 US/BL

to a selected number of lower-order digits of said virtual

<span>0138675</span>

address portion, said selection means including means for decoding said lower-order digits of the virtual address received from said receiving means for which no corresponding entry then exists, and for selecting the entry corresponding to the lower-order digits and for storing the virtual address in the virtual address portion of the entry and the physical address received from either said second translation buffer means or said translation means in the physical address portion of the entry.

FIG.I

FIG. 2